# EUROPEAN PATENT APPLICATION

(11) **EP 4 520 722 A1**
(43) Date of publication of application: **12.03.2025**
(21) Application number: 23195293.8
(22) Date of filing: 05.09.2023
(51) Int. Cl.: C01G 23/02, C07F 3/02, C08F 10/00

(54) **SUSTAINABLE ZIEGLER-NATTA CATALYSTS**

(71) Applicant: LANXESS Organometallics GmbH, 59192 Bergkamen (DE)
(72) Inventor: Holtrichter-Rößmann, Thorsten, 59227 Ahlen (DE); Schwarz, Julia Felicitas, 59227 Ahlen4663 Laakirchen (AT)
(74) Representative: Deblon, Jörg-Stephan

(57) **Abstract**

The present invention relates to Ziegler-Natta procatalysts comprising magnesium chloride prepared from side streams and their use in polymerization reactions.

## Description

The present invention relates to Ziegler-Natta procatalysts comprising magnesium chloride prepared from side streams and their use in polymerization reactions.

Ziegler-Natta catalysts are generally known and widely applied in the production of polyolefins, like ethylene homo- and copolymers. Generally, the catalysts comprise at least a catalyst component, also referred to as procatalyst, formed from a compound of a transition metal of group 4 to 6 of the Periodic Table, a compound of Group 1 to 3 metal of the Periodic Table, optionally a compound of an element of Group 13 of the Periodic Table and optionally an internal donor. The groups of the periodic table as used herein are defined in IUPAC, Nomenclature of Inorganic Chemistry, 2005.

A Ziegler-Natta catalyst further comprises at least one additional catalyst component, such as a cocatalyst and/or an external donor.

The use of magnesium chloride as a solid carrier material for the production of highly active Ziegler-Natta catalysts comprising other catalytic components such as titanium enabled the commercial breakthrough of these polymerization technologies. Due to the increase in activity, it was no longer necessary to remove the catalyst residues from the polymer and the amount of by-products was significantly reduced.

However, to activate the magnesium chloride and to ensure an appropriate catalyst morphology which then translates into desired polymer particle morphology the magnesium chloride employed for catalyst preparation is typically elaborately dried, physically treated by grinding, activated by dissolution and/or precipitation processes before use or produced by a further process step from precursors such as dialkyl magnesium compounds or magnesium ethanolate.

In Inorganica Chimica Acta 371 (2011) 124-129 the preparation of magnesium chloride by reprecipitation from 2-(2-ethylhexyloxy)ethanol is disclosed.

Processes to obtain magnesium chloride by a two-step procedure starting from either dialkyl magnesium compounds such as n-butyl n-octyl magnesium (BOMAG) by reacting it first with an alcohol e.g. 2-ethylhexanol to obtain a magnesium dialcoholate and then with a chloride source e.g. ethyl aluminum dichloride or phthaloylchloride or alternatively starting from magnesium chloride by reaction with an alcohol to form a soluble complex and then reacting the complex with dialkyl magnesium compounds and a chloride source are disclosed in Catalysts 2022, 12(9), 973; US 4,727,051A; WO91/05608A, WO99/33843A, WO2005/118655 A1, EP 810235 A2, WO2014/096296 A1, WO2016/097193 A1 and WO 2021064083 A1.

However the aforementioned procedures require the employment of dialkyl magnesium compounds and/or multistep procedures.

In view of the above there was still a need to provide easily accessible sources of magnesium chloride which are directly suitable as solid catalyst support or in the preparation of Ziegler-Natta catalysts or procatalysts thereof.

Dialkyl magnesium compounds are typically prepared by reacting one or more alkyl halides with magnesium e.g. in the presence of organo aluminum compounds (see e.g. DE2943357). By disproportionation of the initially formed Grignard reagents the desired dialkyl magnesium compounds are formed along with magnesium chloride as a byproduct. The magnesium chloride is typically disposed as a side stream. It was surprisingly found that this magnesium chloride can directly be employed in the preparation of Ziegler-Natta procatalyst.

Therefore there is now provided a process for the preparation of Ziegler-Natta procatalysts the process comprising at least the steps of
1) reacting magnesium with at least one compound of formula (I)

   R¹-Cl (I)

   wherein
   R¹ denotes alkyl or cycloalkyl which are either not or once substituted by phenyl and
   in a non-coordinating solvent thereby forming dialkyl magnesium compounds of formula (II)

      Mg(R¹)₂ (II)
   and magnesium dichloride MgCl₂
2) separating the magnesium dichloride MgCl₂ from the reaction mixture
3) reacting the magnesium dichloride MgCl₂ with a compound of a transition metal of Group 4 to 6 of the Periodic Table.

The scope of the invention encompasses all combinations of substituent definitions, areas of preference or preferred embodiments, with one another, i.e., also any combinations between the particular areas and areas of preference.

Whenever used herein the terms "including", "for example" and "such as" are meant in the sense of "including but without being limited to" or "for example without limitation", respectively.

As used herein the term "non-coordinating solvent" means that the solvent molecules do not contain oxygen, sulfur or nitrogen atoms. For example non-coordinating solvents include aliphatic hydrocarbon solvents such as pentanes, hexanes, heptanes, octanes, nonanes, decanes, undecanes, dodecanes, each of the aforementioned in any possible isomeric pure form or in isomeric mixtures, mineral oils or any mixture of the aforementioned aliphatic hydrocarbon solvents. Preferred non-coordinating solvents include n-pentane, iso-pentane, pentanes, n-hexane, iso-hexane, hexanes, n-heptane, iso-heptane, heptanes, whereby heptanes are preferred.

As used herein, and unless specifically stated otherwise "alkyl" may be branched or unbranched.

As used herein, and unless specifically stated otherwise "cycloalkyl" may be cyclic either in part or as a whole.

Preferably, "alkyl" denotes C₁-C₁₈-alkyl even more preferably C₁-C₈-alkyl which either not or once substituted by phenyl, preferably not substituted. The index at the carbon atoms indicates the number carbon atoms excluding the carbon atoms of optionally present phenyl substituents. Specific examples of C₁-C₈-alkyl are methyl, ethyl, n-propyl, isopropyl, n-butyl, sec.-butyl, tert-butyl, n-pentyl, n-hexyl, n-heptyl, n-octyl, isooctyl, n-decyl, n-dodecyl, whereby methyl, ethyl, isobutyl, n-butyl, sec. - butyl, n-hexyl, 2-ethylhexyl and n-octyl are preferred.

Preferably, "cycloalkyl" denotes C₃-C₁₈-cycloalkyl even more preferably C₅-C₁₈-cycloalkyl which either not or once substituted by phenyl, preferably not substituted. The index at the carbon atoms indicates the number carbon atoms excluding the carbon atoms of optionally present phenyl substituents. Specific examples of C₅-C₁₈-cycloalkyl are cyclopentyl, cyclohexyl, methylcyclohexyl, whereby cyclohexyl is preferred.

Preferred compounds of formula (I) are n-octylchloride, n-butylchloride, ethylchloride, sec-butyl-chloride, and n-hexylchloride.

Preferred compounds of formula (II) are n-butyl-n-octyl-magnesium (BOMAG), n-butyl-ethyl-magnesium (BEM), n-butyl-sec-butyl-magnesium (DBM), di-n-butyl-magnesium (DnBM) di-n-hexyl-magnesium (DHM) and di-n-octyl-magnesium (DOM).

In one embodiment for step 1) a mixture of n-octylchloride and n-butylchloride is employed for example in a molar ratio ranging from 2:1 to 1:5, preferably from 1:1 to 1:4 and more preferably from 1:2 to 1:4, such as 1:3.

In another embodiment for step 1) a mixture of ethylchloride and n-butylchloride is employed for example in a molar ratio ranging from 2:1 to 1:2, preferably from 1,5:1 to 1:1.5 such as 1:1.

The reaction of magnesium and compounds of formula (I) are performed in a non-coordinating solvent.

The magnesium metal may be employed in any form known to those skilled in the art whereby powders are preferred in particular powders with a particle size such that 90 wt% or more of the magnesium employed has a size of 0.2 mm to 2.5 mm.

The process can either be performed batchwise or continuously, preference being given to batchwise performance.

The reaction times in batch processes and the residence time in continuous processes are for example from 30 seconds to 24 hours, preferably from 30 minutes to 12 hours.

The process according to the invention can be performed, for example, in any reactor allowing such kind of reactions, for example a tube reactor with mixing nozzle in case of continuous processes or a stirred tank for batch processes.

Step 1) of the process according to the invention is performed, for example, at temperatures of 30 to 150°C, preferably at temperatures of 80 to 120°C and even more preferred at temperatures of 90 to 150°C.

The reaction pressure is not very critical and can step 1) be 1000 hPa to 5 MPa, preferably from 900 hPa to 1 MPa.

In one embodiment the reaction is carried out in the presence of at least one organo aluminum compound. Suitable organo aluminum compounds include aluminum compounds of the formula Al(C₁-C₁₈-alkyl)₃ for example tri-isobutylaluminum, tri-n-butylaluminum and triethylaluminum or mixtures thereof.

The molar ratio between magnesium and aluminum in this embodiment may be for example 5:1 to 1000:1, preferably 50:1 to 200:1.

As a result diorgano magnesium compounds are obtained, which are typically soluble in the resulting reaction mixture. Further the reactions mixture may contain unreacted magnesium and solid magnesium chloride MgCl₂.

Notably, small amounts of unreacted magnesium up to 20 mol % with regard to the sum of magnesium stemming from unreacted magnesium and magnesium chloride do not interfere with further reaction steps.

In one embodiment step 1) is performed using organolithium compounds such as n-butyllithium as a further reactant to remove or decompose chlorine containing organo magnesium compounds.

In this embodiment the molar ratio of magnesium employed in step 1) and lithium from the organo lithium compound is between 10:1 and 100.000 :1 preferably 100:1 and 1000:1.

In step 2) the magnesium chloride MgCl₂ is separated from the reaction mixture.

This task can be performed be any means known for those skilled in the art to separate solids from liquids e.g. by filtration, centrifugation or decanting.

The separation step may further include one or more washing steps with non-coordinating solvents whereby such steps are preferably performed with the same non-coordinating solvent already used for step 1).

The washing steps aids removal of residual diorgano magnesium compounds which might have an influence on further use.

In step 2) solid magnesium chloride is obtained which typically contains residual amounts of non-coordinating solvent. The magnesium chloride can then either be dried or directly employed in further steps.

In one embodiment step 2) whether including washing steps or not is either directly followed by step 3) or by step 2b).

In step 2b) the magnesium chloride is reacted with an alcohol of formula (IV)

R²-OH (IV)

wherein
R² denotes C₁-C₁₈-alkyl or C₃-C₁₈-cycloalkyl which is either not or once substituted by phenyl, preferably C₂-C₁₂-alkyl which is not substituted by phenyl for example 2-ethyl-hexyl, methyl, ethyl, 2-methyl-1-pentyl, 2-ethyl-1-butyl, 2-ethyl-1-pentyl, 2-ethyl-4-methyl-1-pentayl, 2-propyl-1-heptyl, 2-methyl-1-hexyl and 2-ethyl-5-methyl-1-octyl.

The molar ratio of alcohols of formula (IV) to magnesium chloride in step 2b) is typically from 1.0 to 20.0, preferably from 1.0 to 10.0.

By reacting magnesium chloride with alcohols of formula (IV) adducts are formed which is described best by formula (V)

MgCl₂ × (R²-OH)ₙ (V)

wherein n is an integer of 1 to 6, preferably 1 to 4.

Such adducts are typically soluble in non-coordinating solvents. Therefore step 2b) may for example be employed to remove solids other that magnesium chloride from the reaction mixture obtained in step 1) e.g unreacted magnesium even though the latter as mentioned above does not impede further reaction steps.

The adducts of formula (V) and optionally an excess of alcohol of formula (IV) are then further reacted with
i) organo-magnesium compounds of formula (II) to convert the alcohol of the adducts of formula (V) and optionally the excess of alcohol of formula (IV) into the respective magnesium alcoholates of formula (VI)

   Mg(OR²)₂ (VI)

   and then
ii) reacting the magnesium alcoholates obtained according to step i) with a chloride source to obtain additional magnesium dichloride.

The diorgano magnesium compounds of formula (II) are typically employed as a solution in a non-coordinating solvent, which are commercially available.

In one embodiment the concentration of the diorgano-magnesium compounds in non-coordinating solvents is for example from 5 to 60 wt.-%, preferably from 10 to 50 wt.-% and even more preferably from 20 to 50 wt.-%, yet even more preferably from 25 to 40 wt.-%.

Suitable chloride sources include for example ethyl aluminum dichloride (EADC), diethyl aluminium chloride (DEAC), ethyl aluminium sesquichloride (EASC), isobutyl aluminium dichloride (IBADIC), diisobutylaluminium dichloride (DIBAC) or mixtures of the aforementioned chloride sources, as well as for example aluminium trichloride, tert-butyl chloride, n- butyl chloride and phthaloyldichloride.

Step 2b) of the process according to the invention is performed, for example, at temperatures of 0 to 150°C, preferably at temperatures of 0 to 120°C.

The reaction pressure in step 2b) is not very critical and be for example from 1000 hPa to 5 MPa, preferably from 900 hPa to 1 MPa.

The molar ratio of the sum of alcohol of the adducts of formula (V) and optionally the excess of alcohol of formula (IV) and diorgano magnesium compounds in step 2b) i) is typically from 1.5 to 2.5, preferably from 2.0 to 2.5.

The molar ratio of the chloride content of the chloride sources and the magnesium alcoholates in step 2b) ii) is typically from 0.8 to 1.5, preferably around 1.

Also step b) may further include one or more washing steps with non-coordinating solvents whereby such steps are preferably performed with the same non-coordinating solvent already used for step 1) and /or step 2).

Again, the washing steps aids removal of residual diorgano magnesium compounds or chloride sources which might have an influence on further use or the magnesium chloride.

Also in step 2b) solid magnesium chloride is obtained which typically contains residual amounts of non-coordinating solvent, whereby the magnesium chloride partially obtained via step 1) and partially via step 2b). The magnesium chloride can then either be dried or directly employed in further steps.

In one embodiment step 2b) whether including washing steps or not is directly followed by step 3).

In step 3) the magnesium dichloride MgCl₂ is reacted with at least one compound of a transition metal of Group 4 to 6 of the Periodic Table.

Preferred compounds of a transition metal of Group 4 to 6 of the Periodic Table include compounds of a transition metal of Group 4 or a vanadium compound, more preferably a titanium or vanadium compound, even more preferably a titanium compound, yet even more preferably a halogen-containing titanium compound, most preferably a chlorine containing titanium compound.

Particularly preferably the titanium compound is a halogen-containing titanium compound of the formula HalₘTi(OR³)₄₋ₘ, wherein R³ is a C₁-C₁₈-alkyl group, preferably a C₂- C₁₂-alkyl group, Hal is halogen, preferably chlorine, and m is 1, 2, 3 or 4, preferably 3 or 4 and more preferably 4.

Suitable titanium compounds include trialkoxytitanium monochlorides, dialkoxytitanium dichlorides, alkoxytitanium trichlorides, and titanium tetrachloride. Preferably, titanium tetrachloride is employed in step 3.

Step 3) of the process according to the invention is performed, for example, at temperatures of 20 to 150°C, preferably at temperatures of 50 to 120°C.

The molar ratio of magnesium chloride to the compound(s) of a transition metal of Group 4 to 6 of the Periodic Table is for example 0.5 to 5.0, preferably 1.0 to 1.5.

In one embodiment in step 3) at least one compound of a Group 13 element of the Periodic Table is added, preferably an aluminum compound. Particularly preferably the aluminum compound is an aluminum compound of the formula Al(C₁-C₁₈-alkyl)_{y}Hal_{(4-y)}, wherein Hal is halogen, preferably chlorine and y is 1, 2 or 3. Preferred aluminum compounds are dimethylaluminum chloride, diethylaluminum chloride, di-isobutylaluminum chloride, and triethylaluminum or mixtures thereof. Most preferably, the aluminum compound is triethylaluminum.

The amount of the compound of Group 13 element in the Ziegler-Natta catalyst component is preferably such that the content of the Group 13 element, preferably the aluminum content is in the range of 0.0 wt% to 3.0 wt%, preferably 0.0 wt% to 2.6 wt%, more preferably 0.0 wt% to 2.3 wt% of the total weight of the Ziegler-Natta catalyst component. The amount of the compound of Group 13 element is determined by ICP Analysis as described in the Experimental Part.

As a result Ziegler-Natta procatalysts are prepared which can be employed in polymerization reactions.

In one embodiment the final solid Ziegler-Natta procatalysts exhibit a volume average median particle size in the range of 2 to 100 µm, preferably of 5 to 30 µm.

In another embodiment the final solid Ziegler-Natta procatalysts exhibit a Mg/Ti molar ratio of 2.0 to 15.0, preferably of 2.5 to 12.0.

In yet another embodiment the final solid Ziegler-Natta procatalysts exhibit a Al/Ti molar ratio 0 to 1.0, preferably 0 to 0.8, more preferably 0 to 0.6.

The Ziegler-Natta procatalysts prepared according to the invention are particularly useful to be employed in polymerization reactions such as in the polymerization of olefins, preferably ethylene either with or without C₂-C₂₀ olefins as comonomers.

Therefore one aspect or the present invention relates to the use of Ziegler-Natta procatalysts prepared according to the invention in polymerization reactions, preferably in the polymerization of olefins, more preferably in the polymerization of ethylene either with or without C₂-C₂₀ olefins as comonomers.

Another aspect or the present invention relates to a polymerization process, preferably a process for the polymerization of olefins, and more preferably a process for the of ethylene either with or without C₂-C₂₀ olefins as comonomers wherein Ziegler-Natta procatalysts thereof as prepared according to the process according to the invention are employed.

Suitable C₂-C₂₀ olefins as comonomers include 1-butene, isobutene, 1-pentene, 1-hexene, 4- methyl-1-pentene, 1-heptene, 1-octene, 1-nonene and 1-decene, as well as dienes, such as butadiene, 1,7-octadiene and 1,4-hexadiene, or cyclic olefins, such as norbornene, and any mixtures thereof. Most preferably, the comonomers are 1-butene and/or 1-hexene.

The procatalysts prepared according to the present invention allow for the production of a wide range of polyethylene (co)polymers. Thus, production of high density, medium density and low-density ethylene (co)polymers is possible. If copolymers are the desired end-product, the comonomer content of the ethylene copolymers can vary in wide ranges depending on the desired polymer properties. Thus, the comonomer content can vary from 0.1 wt% to 20 wt%, preferably from 0.5 wt% to 15 wt% and more preferably from 1.0 wt% to 10 wt%.

Further provided herein is a process for producing ethylene homo- or copolymers, comprising the steps of
P1) introducing at least a Ziegler-Natta procatalyst prepared according to anyone of claims 1 to 10 and a cocatalyst capable of activating said Ziegler-Natta procatalyst into a polymerization reactor,
P2) introducing ethylene, and optionally at least one C₂-C₂₀ olefin as comonomer, and optionally hydrogen into the polymerization reactor; and
P3) maintaining said polymerization reactor in such conditions as to produce an ethylene homo- or copolymer.

Suitable cocatalysts are compounds of elements of Group 13 of the Periodic Table, preferably Group 13 C₁-C₁₈ alkyl compounds and more preferably aluminum C₁-C₁₈ alkyl compounds, including trimethylaluminium, triethylaluminium, tri-isobutylaluminium, trihexylaluminium and tri-n- octylaluminium, alkylaluminium halides, such as ethylaluminium dichloride, diethylaluminium chloride, ethylaluminium sesquichloride, and dimethylaluminium chloride.

Especially preferred cocatalysts are tri-(C₁-C₁₈ alkyl)aluminium compounds, of which triethylaluminium, trimethylaluminium and tri-isobutylaluminium are particularly preferred.

The amount of cocatalyst used depends on the specific catalyst and the cocatalyst. Typically, e.g. triethylaluminium is used in such amount that the molar ratio of aluminium to the transition metal, such as Al/Ti, is from 1 to 1000, preferably from 3 to 100 and in particular from about 5 to about 30 mol/mol.

In one embodiment at least one external donor is additionally added in step P1) to the polymerization reactor. Suitable external donors include ethers like tetrahydrofuran, siloxanes, silanes and/or alkyl halides as known from prior art.

The catalyst may be transferred into the polymerization zone by any means known in the art. It is thus possible to suspend the catalyst in a diluent and maintain it as homogeneous slurry.

The polymerization reactor may be any reactor known to those skilled in the art to be suitable for the intended purpose and include continuous stirred tank reactors and loop reactors.

The polymerization in slurry usually takes place in an inert diluent, typically a hydrocarbon diluent such as methane, ethane, propane, n-butane, isobutane, pentanes, hexanes, heptanes, octanes etc., or their mixtures. Preferably, the diluent is a hydrocarbon having from 1 to 4 carbon atoms or a mixture of such hydrocarbons.

The temperature in the slurry polymerization is typically from 40 to 150°C, preferably from 60 to 125°C and in particular from 70 to 100°C. The pressure is from 0.1 to 15 MPa, preferably from 1 to 10 MPa.

The polymerization may be carried out continuously or batch-wise, preferably the polymerization is carried out continuously.

A major advantage of the present invention is that magnesium chloride that is produced as a waste stream in the manufacture of diorgano magnesium compounds can be used as solid carrier material in the preparation of Ziegler-Natta type catalysts or components thereof. Surprisingly the catalysts show high activity and efficiency.

The following examples are intended to illustrate the invention, but without limiting it thereto.

### Experimental:

### General

All experiments were carried out under inert gas in the glovebox or using Schlenk technique.

### Chemicals

n-Butyl-n-octyl magnesium in heptane (BOMAG, 5.2 wt-% Mg), ethyl aluminum dichloride (EADC, 25 wt.-% in heptane) and triethylaluminum (TEA) were used as provided by Lanxess Organometallics GmbH.
2-Ethylhexanol (Merck, 98%, dried over 3 Å molecular sieve)
Titanium tetrachloride (ca. 1 mol L₋₁ in toluene, TCI)
n-Heptane (Roth, >99%)
Nitrogen 5.0 purity (Linde)
Propane 3.5 purity (Gerling Holz+Co)
Ethylene 3.0 purity (Linde), n-heptane >99% purity from Roth

### Analytics

### ICP-MS

The measurement was done using a Thermo Scientific XSeries 2 ICP-MS. The calibration was between 1 and 1000 ppb using a multi-element standard XXI (Centipur) for Mg, Al, Li and Ca, an ICP-MS-68B-B standard (high purity standards) for Ti and a CZ 9100 Mix 020 (Czech metrology institute) for chlorine.

### Ziegler-Natta procatalyst characterization

For the determination of the titanium content, approx. 100 mg of each procatalyst were treated with 3.5 mL nitric acid (69%, semiconductor grade, Honeywell), 1.5 mL hydrochloric acid (37 wt%, analpur analytica) and 3 mL hydrofluoric acid (48 wt% analpur analytica) and decomposed by microwave digestion (MARS 6, CEM Corporation) at 210°C for 30 min (ramp 10 °C min-1). The dilutions were made with 18 MS2 water containing 0.5 wt% HF and 1.3 wt% HNO₃. To investigate the content of aluminum, magnesium, calcium, lithium and chloride, approx. 100 mg samples were digested in 10 mL HNO₃ again at 210°C for 30 min. The dilutions were made with 1% HNO₃ in 18 Ω water to obtain 500 ppb solutions.

### Examples

### A General procedure for the preparation of magnesium chloride by magnesium dialkyl synthesis.

Following the procedure for the preparation of n-butyl-n-octyl magnesium described in DE2943357C2, 1 mol equivalent of magnesium powder was suspended in about 1.6 mol equivalents of heptane and 0.01 mol equivalent of TEA is added. The mixture was heated to boiling and 0.25 mol equivalents of n-octyl chloride and 0.75 mol equivalents of n-butyl chloride were added. After the reaction started, the mixture was allowed to react at this temperature for a further 3 hours. The solution was then cooled and decanted from the solids formed and after optionally adding small quantities of n-butyllithium.

The resulting solid magnesium chloride was isolated and washed with heptanes until the filtrate was no longer active towards water.

Two runs according to the above mentioned procedure were performed with the amounts of starting materials and yields given in table 1 below.

**Table 1: Magnesium chloride preparation examples 1 and 2**

| **Substance** | **Example 1** | **Example 2** |
|---|---|---|
| | Mass [g] | Mass [g] |
| Magnesium | 2.02 | 2.04 |
| Triethylaluminium (TEA) | 0.12 | 0.12 |
| Octylchloride | 3.11 | 3.20 |
| Butylchloride | 5.84 | 5.87 |
| Heptane | 13.60 | 13.60 |
| Butyllithium (15 wt.-% in hexanes) | 1.4 mL | 0 |
| **Isolated yield [g]** | **3.2** | **3.2** |

The analytical results are given in table 2.

**Table 1: Aluminum, Magnesium, Lithium and Chlorine content of Magnesium chloride prepared according to examples 1 and 2.**

| | Al [wt%] | Mg [wt%] | Li [wt%] | Cl [wt%] |
|---|---|---|---|---|
| Example 1 | 0.10 | 26.01 | 0.72 | 55.63 |
| Example 2 | 0.11 | 26.55 | - | 58.65 |

### B General procedure for procatalyst preparation - direct titanation

6.5 Mol equivalents of heptane were added to 1 mol equivalent of the magnesium chloride prepared according to examples 1 and 2 and heated to 80 °C. 0.7 mol equivalents of titanium tetrachloride were added at the same temperature and the reaction mixture was held at 80 °C for a further 45 minutes. The resulting solid was then isolated, washed several times with heptane and dried.

Two runs according to the above mentioned procedure were run with the amounts of starting materials and yields for the resulting directly titanated procatalysts given in table 2 below.

In example 5 the process was performed in full analogy but using commercial magnesium chloride obtained from Sigma Aldrich.

**Table 2: Procatalyst preparation by direct titanation**

| **Example** | **Example 3** | **Example 4** | **Example 5** |
|---|---|---|---|
| **Catalyst** | **Procat-1** | **Procat-2** | **Procat-3*** |
| MgCl₂ [g] | 0.99 | 0.99 | 0.99 |
| | obtained according to example 1 | obtained according to example 2 | commercial |
| Titanium tetrachloride (1 mol/L) | 7 mL | 7 mL | 7 mL |
| Heptane | 6.8 | 6.8 | 6.8 |
| **Isolated yield [g]** | 0.69 | 0.72 | 0.71 |

| | | | |
|---|---|---|---|
| * not according to the invention, for comparison | | | |

### C General procedure for procatalyst preparation - precipitation process

1 mol equivalent of the solid prepared according to example 1 calculated on 100 wt % magnesium chloride was suspended with 9.4 mol equivalents of 2-ethylhexanol and stirred at 120°C for at least 120 minutes. Then 2.2 to 2.4 mol equivalents, based on 2-ethylhexanol, of this solution were added to 1 mol equivalent of a 20 wt.-% solution of n-butyl-n-octyl magnesium in heptane, so that an internal temperature of 0 to 5°C was maintained. Then the resulting reaction mixture was stirred at 20 to 25°C for 60 minutes. Next, 2.4 to 2.6 mol equivalents of ethylaluminium dichloride (EADC, 25 % in heptane) were heated to 60°C and added to the magnesium alcoholate solution within 60 minutes. During the reaction, a solid precipitated and the suspension was stirred at 60°C for another 60 minutes. The precipitated solid magnesium chloride was then separated, washed several times with heptane and dried.

The magnesium chloride was then suspended in heptane and heated to 80°C. At this temperature, 0.7 to 0.9 mol equivalents of titanium tetrachloride were added and the reaction mixture was held at 80°C for a further 45 minutes. The resulting solid was then isolated, washed several times with heptane and dried.

Three runs according to the above mentioned procedure were performed with the amounts of starting materials and yields for the resulting precipitated procatalysts given in table 3 below (Examples 6 to 8, Procats-4 to 6).

For example 9 (Procat-7) the process was performed in full analogy but using commercial magnesium chloride obtained from Sigma Aldrich.

In example 10 Procat-8 was prepared in full analogy to the procedure disclosed in Catalysts 2022, 12(9), 973, Entry 1.

**Table 3: Catalyst preparation by precipitation**

| **Example** | **6** | **7** | **8** | **9** | **10** |
|---|---|---|---|---|---|
| **Catalyst** | **Procat-4** | **Procat-5** | **Procat-6** | **Procat-7*** | **Procat-8*** |
| MgCl₂ [g] | 0.83 | 0.83 | 0.78 | 0.79 | none |
| 2-Ethylhexanol [g] | 10.63 | 10.63 | 10.07 | 10.26 | 3.34 |
| BOMAG solution (5.2wt%) [g] | 0.21 | 0.21 | 0.21 | 0.22 | 6.03 |
| Heptane [g] | 0 | 10.2 | 10.2 | 0 | |
| MgCl₂-Ethylhexanol Solution [g] | 2.72 | 2.74 | 2.65 | 2.62 | - |
| Ethylaluminium dichloride (25 wt% in heptane) [g] | 2.76 | 2.76 | 2.76 | 2.76 | 6.46 |
| Titanium tetrachloride (1 mol/L) | 7 mL | 7 mL | 7 mL | 7 mL | 7 mL |
| **Isolated yield [g**] | 1.71 | 1.76 | 1.67 | 2.04 | 1.80 |

| | | | | | |
|---|---|---|---|---|---|
| * not according to the invention, for comparison | | | | | |

The analytical results of the procats prepared according to examples 3 to 10 (Procats 1 to 8) are given in table 4.

**Table 4: Aluminum, Magnesium, Lithium and Titanium content of the procats 1 to 8 prepared according to examples 3 to 10.**

| | Al [wt%] | Mg [wt%] | Li [wt%] | Ti [wt%] |
|---|---|---|---|---|
| Procat-1 | 0.09 | 24.28 | 0.79 | 3.40 |
| Procat-2 | 0.09 | 23.71 | 0.00 | 3.61 |
| Procat-3^{∗} | n.d. | 25.89 | n.d. | 0.00 |
| Procat-4 | 7.69 | 11.51 | 0.07 | 6.17 |
| Procat-5 | 0.60 | 8.14 | 0.05 | 4.68 |
| Procat-6 | 8.63 | 11.38 | 0.00 | 6.56 |
| Procat-7^{∗} | 6.44 | 8.66 | 0.00 | 4.92 |
| Procat-8^{∗} | n.d. | n.d. | n.d. | 7.40 |

| | | | | |
|---|---|---|---|---|
| * not according to the invention, for comparison | | | | |

### D Polymerization using the supported catalysts

The following gases and liquids were used for the polymerization experiments: propane, hydrogen, ethylene, nitrogen and n-heptane as indicated above. With a purification unit containing oxidizing/reducing catalyst systems and molecular sieves, it was ensured that no impurities were present in the reactor system.

The experiments were performed under isoperibolic conditions at constant pressure and jacket temperature in a 0.5 L stainless steel reactor. The temperature and pressure maximum were 120°C and 6 MPa. The system was equipped with a propeller stirrer and the stirrer speed was set to 400 rpm. The reactor was featured with three different heating systems, an internal system, a lid heating and the jacket was heated with a 6 kW electrical power heater. The injection of the catalyst and co-catalyst was done manually using a Gilson pipette under nitrogen flow.

First, the catalyst and co-catalyst (TEA) suspensions were prepared in the glove box (Braun MG 150-BG, nitrogen atmosphere). The desired catalyst amount was weighed in and suspended in oil (Ondina Shell Oil, catalyst to oil ratio 1:52). Further the required TEA mass was prepared and also suspended in oil in a ratio of about TEA to oil ratio 1:1.7. The flasks were removed from the glove box and attached to the nitrogen flushing unit at the reactor.

As solvent for the polymerization propane was filled into the reactor and heated to 30°C. Afterwards, H₂ and ethylene were transferred into the reactor system via mass flow controllers. The necessary amount of TEA and catalyst were pipetted into the reactor nozzles, which were flushed with nitrogen in the counterflow. After a precontacting time of 5 min the suspension was injected into the reactor using n-heptane. After the injection, the reactor was heated to 70 °C and within this time a pre-polymerization was performed. Reaching the desired temperature, the ethylene feed was started and kept constant at 3.2 MPa by the mass flow controller. In order to achieve the pressure faster, a larger mass flow controller with more throughput was used additionally to the small one until the desired pressure was obtained (after approx. 1-2 minutes). After 30 min polymerization time the ethylene supply was stopped, the solvent and gases were released and the reactor was flushed with nitrogen before opening. The white polymer powder was taken out and the reactor was cleaned with compressed air and *n*-heptane. Afterwards the reactor was closed, filled with 1 MPa nitrogen and the temperature increased to 100 °C. In the next steep vacuum was applied at the temperature and these two steps were repeated for three times for the inertisation of the reactor. The reactor was cooled down to room temperature and around 100 g of propane was filled into the reactor. Afterwards, the temperature was increased to 100 °C for around 20 min. After releasing the solvent, the next experiment was performed.

Polymerizations were performed using the catalysts obtained according to examples 3 to 8. The productivities calculated on the mass of catalyst and on the titanium content are given in table 6.

**Table 6: Productivities of the catalysts according to examples 3 to 9**

| No. | *R*p,cat / kgPE gCat-1 h-1 | *R*p,Ti / kgPE gTi-1 h-1 |
|---|---|---|
| Procat-1 | 7.37 ± 1.75 | 192.4 ± 21.0 |
| Procat-2 | 7.61 ± 0.58 | 210.8 ± 16.1 |
| Procat-3^{∗} | No activity detected | No activity detected |
| Procat-4 | 23.47 ± 1.00 | 380.4 ± 16.1 |
| Procat-5 | 17.6 ± 0.66 | 381.6 ± 14.1 |
| Procat-6 | 21.26 ± 0.60 | 324.1 ± 9.1 |
| Procat-7^{∗} | 16.47 ± 0.62 | 334.9 ± 12.6 |
| Procat-8^{∗} | 25.4 ± 0.98 | 343.5 ± 13.2 |

| | | |
|---|---|---|
| * not according to the invention, for comparison | | |

It is apparent that the examples according to the invention clearly show that the magnesium chlorides obtained as a waste stream from dialkyl magnesium preparation are suitable as a support for and to prepare efficient polymerization catalysts even in comparison with conventionally prepared magnesium chlorides while commercial magnesium chloride (for comparison) cannot be employed for that purpose at all.

## Claims

1. A process for the preparation of Ziegler-Natta procatalysts, the process comprising at least the steps of
1) reacting magnesium with at least one compound of formula (I)
R¹-Cl (I)
wherein
R¹ denotes alkyl or cycloalkyl which are either not or once substituted by phenyl and
in a non-coordinating solvent thereby forming dialkyl magnesium compounds of formula (II)
Mg(R¹)₂ (II)
and magnesium dichloride MgCl₂
2) separating the magnesium dichloride MgCl₂ from the reaction mixture
3) reacting the magnesium dichloride MgCl₂ with at least one compound of a transition metal of Group 4 to 6 of the Periodic Table.

2. The process according to claim 1, wherein the non-coordinating solvent is selected from solvents that do not contain oxygen, sulfur or nitrogen atoms.

3. The process according to claim 1 or 2, wherein the compounds of formula (II) are selected from the group consisting of n-butyl-n-octyl-magnesium (BOMAG), n-butyl-ethyl-magnesium (BEM), n-butyl-sec-butyl-magnesium (DBM), di-n-butyl-magnesium (DnBM) di-n-hexyl-magnesium (DHM) and di-n-octyl-magnesium (DOM).

4. The process according to anyone of claims 1 to 3, wherein step 1) is carried out in the presence of at least one organo aluminum compound, preferably aluminum compounds of the formula Al(C₁-C₁₈-alkyl)₃.

5. The process according to anyone of claims 1 to 4, wherein step 2) is either directly followed by step 3) or step 2b) wherein the magnesium chloride is reacted with an alcohol of formula (IV)
R²-OH (IV)
wherein
R² denotes C₁-C₁₈-alkyl or C₃-C₁₈-cycloalkyl which is either not or once substituted by phenyl, preferably C₂-C₁₂-alkyl which is not substituted by phenyl
to form adducts of formula (V)
MgCl₂ × (R²-OH)ₙ (V)
wherein n is an integer of 1 to 6, preferably 1 to 4
and the adducts of formula (V) and optionally an excess of alcohol of formula (IV) are then further reacted with
i) organo-magnesium compounds of formula (II) as defined in claim 1 to convert the alcohol of the adducts of formula (V) and optionally the excess of alcohol of formula (IV) into the respective magnesium alcoholates of formula (VI)
Mg(OR²)₂ (VI)
and then
ii) reacting the magnesium alcoholates obtained according to step i) with a chloride source to obtain additional magnesium dichloride.

6. The process according to claim 4, wherein in step 2b) the chloride source is selected from the group consisting of ethyl aluminum dichloride (EADC), diethyl aluminium chloride (DEAC), ethyl aluminium sesquichloride (EASC), isobutyl aluminium dichloride (IBADIC), diisobutylaluminium dichloride (DIBAC) or mixtures of the aforementioned chloride sources, or aluminium trichloride, tert-butyl chloride, n- butyl chloride and phthaloyldichloride.

7. The process according to anyone of claims 1 to 6, wherein in step 3) the compounds of a transition metal of Group 4 to 6 of the Periodic Table are selected from compounds of a transition metal of Group 4 or a vanadium compound, more preferably a titanium or vanadium compound, even more preferably a titanium compound, yet even more preferably a halogen-containing titanium compound, most preferably a chlorine containing titanium compound.

8. The process according to anyone of claims 1 to 7, wherein in step 3) the compounds of a transition metal of Group 4 to 6 of the Periodic Table are selected from halogen-containing titanium compounds of the formula HalₘTi(OR³)₄₋ₘ, wherein R³ is a C₁-C₁₈-alkyl group, preferably a C₂- C₁₂-alkyl group, Hal is halogen, preferably chlorine, and m is 1, 2, 3 or 4, preferably 3 or 4 and more preferably 4.

9. The process according to anyone of claims 1 to 8, wherein step 3) is performed at temperatures of 20 to 150°C, preferably at temperatures of 50 to 120°C.

10. The process according to anyone of claims 1 to 9, wherein the molar ratio of magnesium chloride to the compound(s) of a transition metal of Group 4 to 6 of the Periodic Table is for example 0.5 to 5.0, preferably 1.0 to 1.5.

11. Use of Ziegler-Natta procatalysts prepared according to anyone of claims 1 to 10 in polymerization reactions, preferably in the polymerization of olefins, more preferably in the polymerization of ethylene either with or without C₂-C₂₀ olefins as comonomers.

12. A process for the producing ethylene homo- or copolymers, comprising the steps of
P1) introducing at least a Ziegler-Natta procatalyst prepared according to anyone of claims 1 to 10 and a cocatalyst capable of activating said Ziegler-Natta procatalyst into a polymerization reactor,
P2) introducing ethylene, and optionally at least one C₂-C₂₀ olefin as comonomer, and optionally hydrogen into the polymerization reactor;
and
P3) maintaining said polymerization reactor in such conditions as to produce an ethylene homo- or copolymer.

13. The process according to claim 12, wherein the cocatalysts are compounds of elements of Group 13 of the Periodic Table, preferably Group 13 C₁-C₁₈ alkyl compounds and more preferably aluminum C₁-C₁₈ alkyl compounds, and even more preferably trimethylaluminium, triethylaluminium, tri-isobutylaluminium, trihexylaluminium and tri-n- octylaluminium, alkylaluminium halides, such as ethylaluminium dichloride, diethylaluminium chloride, ethylaluminium sesquichloride, and dimethylaluminium chloride.

14. The process according to claim 12 or 13, wherein the polymerization process is carried out as a slurry process.
